# FASCICULE DE BREVET EUROPEEN

(11) **EP 2 980 421 B1**
(45) Date de publication et mention de la délivrance du brevet: **12.04.2017**
(21) Numéro de dépôt: 15177677.0
(22) Date de dépôt: 21.07.2015
(51) Int. Cl.: F16B 5/02, F16B 39/30

(54) **DISPOSITIF DE FIXATION D'UNE PIÈCE SUR UN SUPPORT AVEC COMPENSATION D'UN ÉCART ENTRE LA PIÈCE ET LE SUPPORT, ÉLÉMENT DE RÉGLAGE ET UNITÉ DE RÉGLAGE D'UN TEL DISPOSITIF**
BEFESTIGUNGSVORRICHTUNG EINES TEILS AUF EINER HALTERUNG MIT KOMPENSIERUNG DES ABSTANDS ZWISCHEN DEM TEIL UND DER HALTERUNG, REGULIERELEMENT UND REGULIEREINHEIT EINER SOLCHEN VORRICHTUNG
DEVICE FOR ATTACHING A PART TO A MOUNTING WITH COMPENSATION OF A GAP BETWEEN THE PART AND THE MOUNTING, ADJUSTING MEMBER AND UNIT FOR ADJUSTING SUCH A DEVICE

(30) Priorité: 28.07.2014 FR 1401734
(43) Date de publication de la demande: 03.02.2016
(73) Titulaire: Bollhoff Otalu S.A., 73490 La Ravoire (FR)
(72) Inventeur: Joly, Fabien, 73670 Entremont-le-Vieux (FR); Huyghe, David, 38530 Pontcharra (FR); Perroud, Norbert, 73190 Curienne (FR); Basset, Raphael, 73000 Sonnaz (FR)
(74) Mandataire: Hecké, Gérard

(56) Documents cités:
- EP-A1- 0 533 513
- EP-A1- 1 666 342
- EP-A1- 1 832 759
- DE-A1- 3 932 193
- DE-A1-102005 050 919
- DE-U1- 8 202 339
- DE-U1-202014 100 259
- US-A1- 2012 051 869

## Description

### Domaine technique de l'invention

L'invention concerne la fixation d'une pièce sur un support avec une compensation d'un écart entre la pièce et le support, et plus particulièrement un élément de réglage, une unité de réglage et un dispositif de fixation comprenant un tel élément et une telle unité.

### État de la technique

Actuellement, certaines pièces d'un ensemble mécanique peuvent être séparées par un écart pouvant varier du fait des tolérances de montage ou de fabrication. Il existe donc des dispositifs de fixation (voir par exemple EP 0 533 513 A) pour fixer une première pièce, notée également support, sur une deuxième pièce en compensant cet écart.

Par exemple, un dispositif de fixation peut comprendre une douille de rattrapage de jeu, c'est-à-dire de compensation d'un écart, un élément de fixation et une vis de fixation. L'élément de fixation est creux et comporte un filetage interne d'un sens de pas antihoraire, c'est-à-dire un pas à gauche, destiné à coopérer avec un filetage externe, d'un sens antihoraire également, prévu sur la douille de rattrapage de jeu. L'élément de fixation est d'abord monté sur une première pièce, c'est-à-dire sur le support, et la douille de rattrapage de jeu est visée sur l'élément de fixation. La douille comporte, quant à elle, un corps cylindrique muni de pattes de friction situées à l'extrémité du corps. Les pattes de friction comportent, chacune, un cran en sailli à l'intérieur du corps de la douille. Ce dispositif permet de fixer une deuxième pièce au support en rattrapant le jeu entre la deuxième pièce et le support. Pour effectuer cette fixation, la vis de fixation traverse une ouverture prévue dans la deuxième pièce, puis on insère la vis dans le creux de la douille jusqu'à ce que le filetage externe de la vis atteigne les crans des pattes de friction. Les pattes de fixation créent un couple de friction qui permet un dévissage de la douille. Le filetage de la vis a un sens de pas horaire, et sous l'effet du vissage de la vis dans le sens horaire, la douille se dévisse de l'élément de fixation et se déplace vers la deuxième pièce à fixer jusqu'à être en contact avec la deuxième pièce. Il suffit ensuite de poursuivre le vissage jusqu'à ce que le dispositif de fixation soit bloqué sous l'effet de la tension de serrage de la vis. Dans cette position, on a compensé l'écart entre la pièce à fixer et le support, et on a fixé la pièce au support. Mais un tel dispositif n'est pas adapté pour garantir une conductivité électrique entre la pièce à fixer et le support. En effet, le couple de friction fourni par les pattes ne permet pas de réaliser un contact avec une pression suffisante pour garantir une conductivité électrique entre la pièce et le support. En particulier le couple de friction fourni par les pattes de friction est environ égal à 0,5 Nm et il est trop faible pour assurer un contact suffisant. Il s'avère que le couple nécessaire pour assurer un contact électrique, lorsque, notamment, la pièce est revêtue en surface d'un revêtement non conducteur, telle une couche de peinture, doit être au moins environ égal à 2 Nm.

Il existe d'autres dispositifs de friction qui utilisent un patch en plastique déposé sur la vis de fixation pour augmenter le couple de friction, mais lors du vissage le patch a tendance à se disperser par friction, et le vissage peut alors se décentrer, ce qui entraîne un frottement trop important pouvant aller jusqu'à la déformation de la pièce à fixer.

### Objet de l'invention

Un objet de l'invention consiste à pallier les inconvénients cités ci-avant, et en particulier à fournir des moyens de fixation avec une compensation d'un écart entre deux pièces qui améliore la conductivité électrique entre les pièces.

Un autre objet de l'invention est de fournir des moyens de fixation qui puissent être entraînés de manière automatique, par exemple à l'aide d'un outil de vissage manipulé par un automate, tout en limitant les efforts engendrés sur la pièce à fixer de manière à empêcher sa déformation.

Selon un aspect de l'invention, il est proposé un élément de réglage pour compenser un écart entre un support et une pièce à fixer sur le support, comprenant un corps creux muni d'un filetage externe d'un premier sens de pas.

Le corps creux comporte un filetage interne d'un deuxième sens de pas opposé au premier, le filetage interne comprenant au moins deux filets, et dont au moins un filet est déformé pour fournir un couple de friction supérieur à celui fourni par les autres filets du filetage interne.

Un tel élément de réglage est particulièrement adapté aux dispositifs de compensation d'un écart entre une pièce et un support de manière à améliorer la conductivité électrique entre l'élément de réglage et la pièce à fixer. En effet, les filets déformés permettent d'augmenter le couple de friction pour gratter la surface d'une pièce à fixer sur un support. Par ailleurs, lors d'une opération de vissage d'une vis dans le filetage interne, l'élément de réglage permet de bloquer la progression de la vis pour augmenter le couple de vissage fourni par la vis. Une telle augmentation du couple de vissage offre la possibilité de compenser l'écart entre la pièce et le support, notamment en permettant de dévisser l'élément de réglage dans un écrou dans lequel il est préalablement vissé à l'aide du filetage externe.

Le couple de friction peut être supérieur ou égal à un couple de grattage permettant de gratter la pièce à fixer pour réaliser une conductivité électrique entre la pièce à fixer et l'élément de réglage. Ainsi, on garantit la conductivité électrique entre les pièces.

L'élément de réglage peut comprendre en outre une tête d'appui situé à une extrémité du corps creux, ledit au moins un filet déformé pouvant être situés à l'extrémité opposée à la tête d'appui, ou à proximité de la tête d'appui.

On favorise ainsi la création des filets déformés à partir des extrémités du filetage interne qui sont accessibles par l'extérieur du corps creux.

L'élément peut comporter au moins un cran de grattage situé en saillie de la tête d'appui.

Ainsi, on améliore encore le grattage de la pièce et la conductivité électrique entre la pièce et l'élément de réglage.

Ledit au moins un filet déformé peut être traversé par une vis lorsqu'un couple de vissage exercé par la vis sur ledit au moins un filet déformé est supérieur au couple de friction.

En outre, les filets déformés sont également configurés pour être traversés par une vis, lors d'une opération de vissage, et empêchent ainsi la pièce à fixer de se déformer pendant le vissage.

Selon un autre aspect de l'invention, il est proposé une unité de réglage pour compenser un écart entre un support et une pièce à fixer sur le support, comprenant :
- un élément de réglage tel que défini ci-avant ; et
- un écrou monté sur le support et comprenant un filetage interne du premier sens de pas configuré pour coopérer avec le filetage externe de l'élément de réglage ;
- l'élément de réglage étant vissé dans le filetage interne de l'écrou.

Une telle unité de réglage permet de transporter facilement l'élément de réglage afin de placer l'unité de réglage à une distance déterminée lorsque le support est placé en regard de la pièce à fixer avec l'écart à compenser.

L'élément de réglage peut être bloqué sur l'écrou avec un couple de blocage, et le couple de friction fourni par ledit au moins un filet déformé du filetage interne de l'élément de réglage est supérieur au couple de blocage, afin de débloquer l'élément de réglage de l'écrou.

Selon encore un autre aspect, il est proposé un dispositif de fixation d'une pièce sur un support, comprenant :
- une unité de réglage pour compenser un écart entre le support et la pièce, telle que définie ci-avant ; et
- une vis ayant un filetage externe du deuxième sens de pas configurée pour coopérer avec le filetage interne de l'élément de réglage de l'unité de réglage, la vis étant vissée dans le filetage interne de l'élément de réglage de façon à dévisser l'élément de réglage de sorte qu'il soit en appui contre la pièce.

Un tel dispositif permet de compenser l'écart entre la pièce et le support tout en garantissant une conductivité électrique entre la pièce et l'élément de réglage.

Le couple de friction peut être inférieur à un couple de déformation pour lequel la pièce se déforme. Ainsi, on garantit que la pièce ne se déforme pas lors de sa fixation au support.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1, illustre schématiquement une vue latérale en perspective d'un mode de réalisation d'un élément de réglage ;
- la figure 2, illustre schématiquement une vue de dessus de l'élément de réglage de la figure 1 ;
- la figure 3, illustre schématiquement une vue de dessous de l'élément de réglage de la figure 1 ;
- les figures 4 et 4bis, illustrent schématiquement deux vues en coupe d'autres modes de réalisation de l'élément de réglage ;
- la figure 5, illustre de façon schématique une vue en coupe d'un mode de réalisation d'une unité de réglage ; et
- les figures 6 à 9, illustrent de façon schématique des vues en coupe des différents états de montage d'un mode de réalisation d'un dispositif de fixation.

### Description détaillée

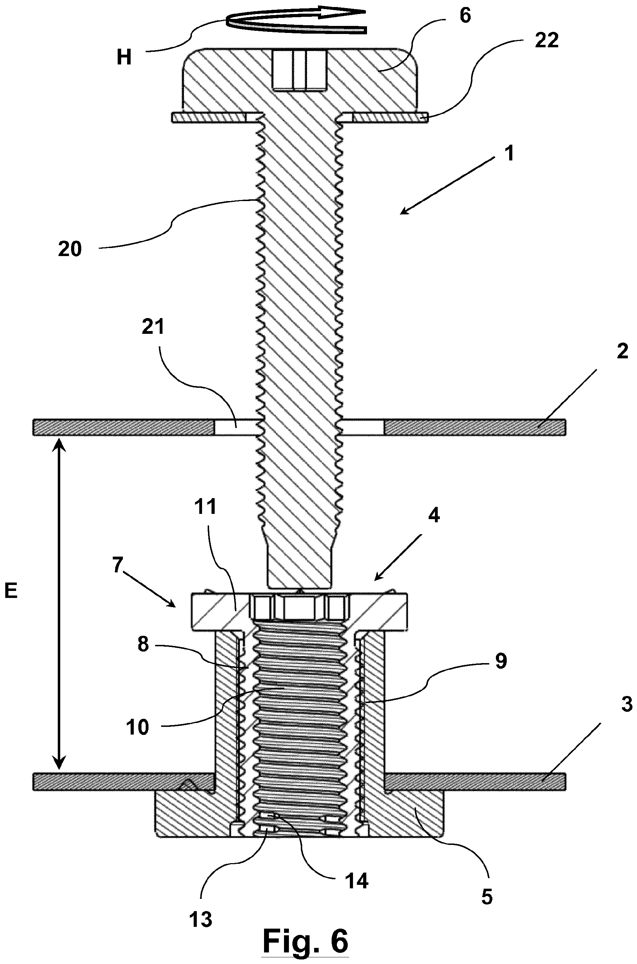

Sur les figures 6 à 9, on a représenté un dispositif de fixation 1 d'une pièce 2 sur un support 3. La pièce 2 est séparée du support 3 par un écart E qui peut varier selon le montage ou la fabrication de l'assemblage pièce/support. Le dispositif de fixation 1 permet de compenser l'écart E tout en fixant la pièce 2 au support 3. Le dispositif de fixation 1 comporte un élément de réglage 4, un écrou 5 et une vis 6 de fixation. L'élément de réglage 4 et l'écrou 5 peuvent être assemblés pour former une unité de réglage 7.

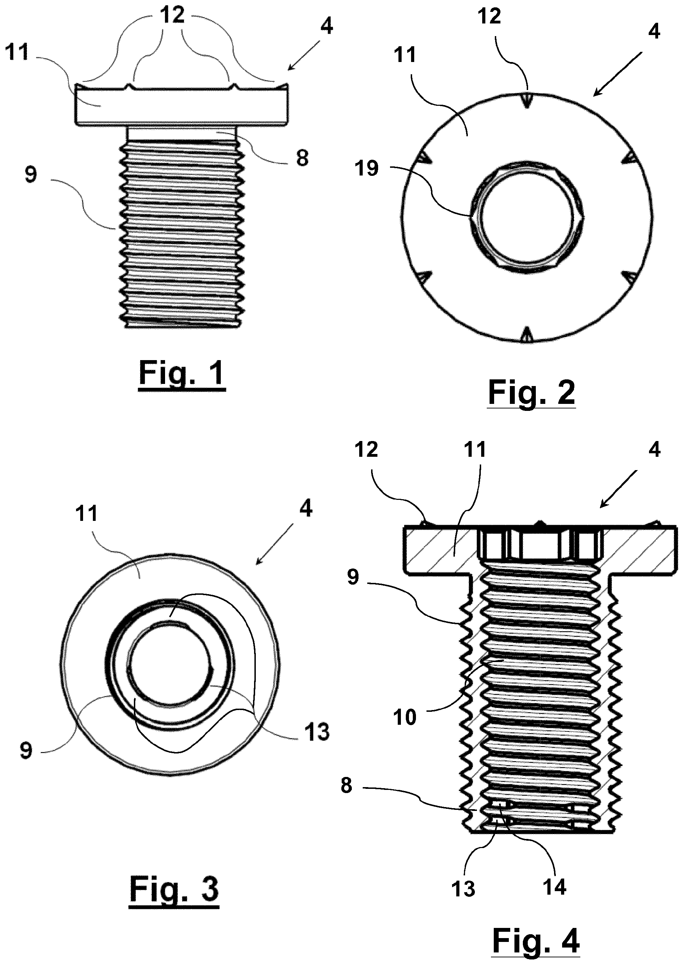

L'élément de réglage 4, illustré aux figures 1 à 4 et 4bis et appelé également « douille d'expansion », comporte un corps creux 8 muni d'un filetage externe 9 d'un premier sens de pas, et d'un filetage interne 10 d'un deuxième sens de pas opposé au premier. Le corps creux 8 est de façon générale cylindrique, et de préférence à section circulaire. On entend ici par cylindre, un solide limité par une surface cylindrique engendrée par un ensemble de droites parallèles, notées génératrices, s'appuyant sur une courbe plane fermée, notée directrice, et deux plans parallèles coupant les génératrices. Préférentiellement, le premier sens de pas est un pas à gauche, c'est-à-dire que pour faire progresser l'élément de réglage 4 lors d'une opération de vissage de l'élément de réglage 4 dans l'écrou 5, on doit animer l'élément de réglage 4 en rotation selon le sens inverse des aiguilles d'une montre. Au contraire, le deuxième sens de pas est, de préférence, un pas à droite, c'est-à-dire que le filetage interne 10 peut recevoir une vis qui progresse à l'intérieur du corps 8 de l'élément de réglage 4 lors d'une opération de vissage en animant la vis en rotation selon le sens des aiguilles d'une montre. L'élément de réglage 4 comprend en outre une tête d'appui 11 située à une extrémité du corps creux 8. La tête d'appui 11 peut être munie d'au moins un cran 12 de grattage situé en saillie dans une direction opposée à celle du corps creux 8. Les crans 12 de grattage sont destinés à gratter la pièce à fixer 2 pour assurer un contact électrique entre la pièce 2 et l'élément de réglage 4. Par exemple lorsque l'élément de réglage 4 et l'écrou 5, ainsi que la pièce 2 et le support 3 sont en métal, on peut assurer une conductivité électrique entre la pièce 2 et le support 3, ce qui permet, notamment, de relier la pièce et le support à un même potentiel de référence, par exemple à la masse.

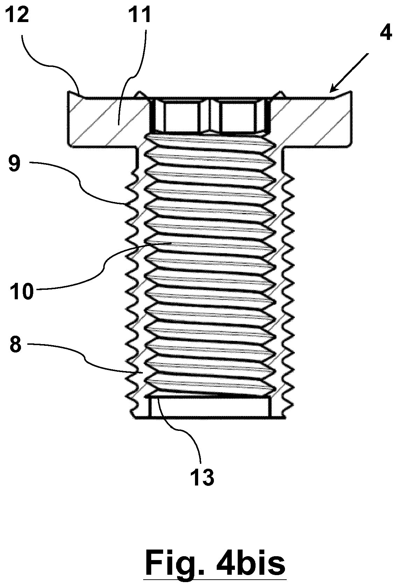

En outre, le filetage interne 10 comprend au moins deux filets pour permettre le vissage de la vis 6 du dispositif de fixation 1. On entend par filet, un bourrelet, également appelé spire, parcourant la surface interne ou externe du corps d'une pièce. Le filet est créé lorsqu'on creuse une rainure hélicoïdale dans le corps de la pièce. Le filetage comporte un ensemble de filets, ou spires, qui se succèdent de manière hélicoïdale, et le pas de l'hélice correspond au pas du filetage. Plus particulièrement, au moins un filet 13, 14 du filetage interne 10 est déformé de façon à fournir un couple de friction supérieur à celui fourni par les autres filets du filetage interne 10. On entend par filet déformé, un filet qui comporte au moins une partie qui a été déformée pour être rapprochée d'un filet adjacent. C'est-à-dire que la distance entre le filet déformé et le filet adjacent est inférieure au pas du filetage interne. Le rapprochement du filet déformé avec le filet adjacent fournit un couple de fiction supérieur à celui fourni par les autres filets non déformés du filetage interne. En effet, le resserrement des filets va bloquer par frottements une vis lors de son vissage dans le filetage. Le couple de friction procuré par les filets déformés 13, 14 du filetage interne 10 de l'élément de réglage 4 permet de bloquer en rotation la vis 6 de fixation lorsqu'on visse cette dernière dans le filetage interne 10. En outre, le couple de friction correspond à un couple maximum que doit fournir une vis, lors du vissage, pour vaincre les frottements créés par le filet déformé de manière à écarter le filet déformé. Lorsque la vis écarte le filet déformé, elle peut progresser dans le filetage car elle n'est plus bloquée. En d'autres termes, l'écartement d'un filet déformé permet de recréer un filet non déformé qui autorise la progression de la vis. La progression de la vis est autorisée car le filet non déformé ainsi recréé fournit un couple environ égal à celui fourni par les autres filets du filetage. De manière générale, au moins un filet déformé 13, 14 peut être situé à tout niveau du filetage interne 10. Un filet déformé peut être réalisé à l'extrémité opposée à la tête d'appui 11, car le filet à déformer est plus facilement accessible. En variante, il peut être réalisé à proximité de la tête d'appui 11. Par exemple, on peut réaliser un ou deux filets déformés 13, 14 par une opération de frappe sur les filets du filetage interne 10. La frappe peut être effectuée sur un point d'un filet 13, ou sur plusieurs points du même filet 13, par exemple trois points, régulièrement répartis sur la circonférence interne du corps creux 8, comme illustré sur la figure 3. On peut encore déformer un filet complet du filetage interne 10. On a représenté sur la figure 3, à titre d'exemple, un filet déformé 13 sur trois points. En variante, on a représenté sur la figure 4, deux filets déformés 13, 14, chacun sur trois points. On a également représenté sur la figure 4bis un filet 13 complètement déformé 13. C'est-à-dire que tout le filet est déformé pour être rapproché d'un filet adjacent. De préférence, le dernier filet 13 est complètement déformé, c'est-à-dire le filet situé à l'extrémité opposée de la tête d'appui 11. Afin de faciliter la réalisation des filets déformés 13, 14 , la frappe est réalisée, de préférence, sur les derniers filets du filetage interne 10, c'est-à-dire sur les filets situés à l'extrémité opposée à la tête d'appui 11.

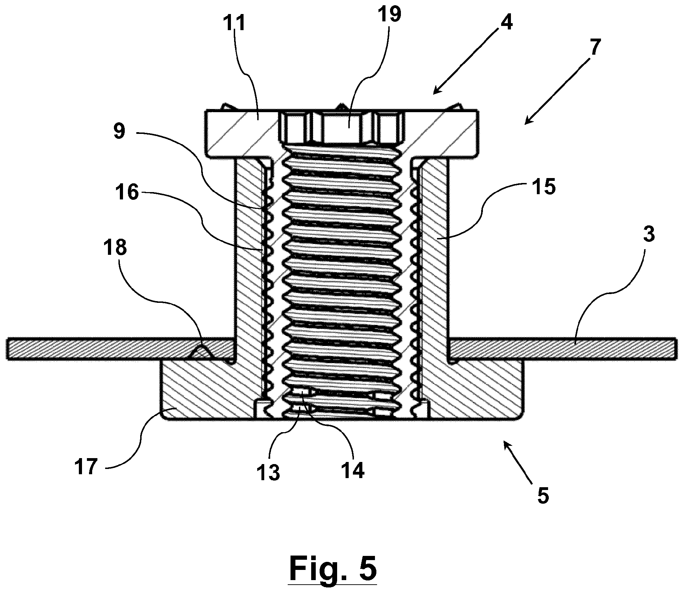

Sur la figure 5, on a représenté l'élément de réglage 4 assemblé sur l'écrou 5 pour former l'unité de réglage 7. L'écrou 5 comporte un corps creux cylindrique 15 comprenant un filetage interne 16 du premier sens de pas configuré pour coopérer avec le filetage externe 9 de l'élément de réglage 4. Un écrou est une pièce de fixation creuse taraudée, c'est-à-dire qui comporte un filetage interne, destinée à être fixée à une autre pièce filetée. Le filetage interne 16 de l'écrou 5 permet de visser l'élément de réglage 4 sur l'écrou 5, lors d'une opération de vissage dans le sens inverse des aiguilles d'une montre lorsque le premier sens de pas est un pas à gauche. L'écrou 5 comporte en outre une embase 17 pour fixer l'écrou 5 au support 3. L'écrou 5 peut être fixé au support 3 par soudure, sertissage, ou encore collage. L'écrou 5 peut aussi comporter des clips pour se clipper au support 3. Dans l'exemple illustré à la figure 5, l'écrou 5 est soudé au support 3. Avantageusement, l'écrou 5 peut comporter des crans 18 pour favoriser la soudure. Puis on insère l'élément de réglage 4 dans l'écrou 5 par vissage pour former l'unité de réglage 7. La tête d'appui 11 peut, en outre, comporter une empreinte 19 ayant une forme hexagonale 19, ou tout autre forme, pour le montage et le démontage de l'élément de réglage 4 sur l'écrou 5. De préférence, l'élément de réglage 4 est vissé jusqu'à son blocage à un couple de blocage. Le couple de blocage peut être un couple anti dévissage pour empêcher la désolidarisation entre l'élément de réglage 4 et l'écrou 5, par exemple lors d'un transport du support 3 avec l'unité de fixation 7 montée sur le support 3.

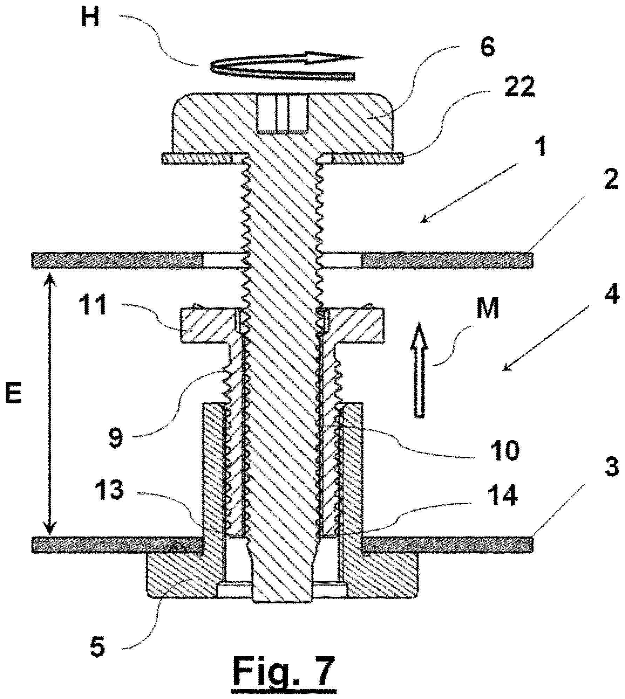

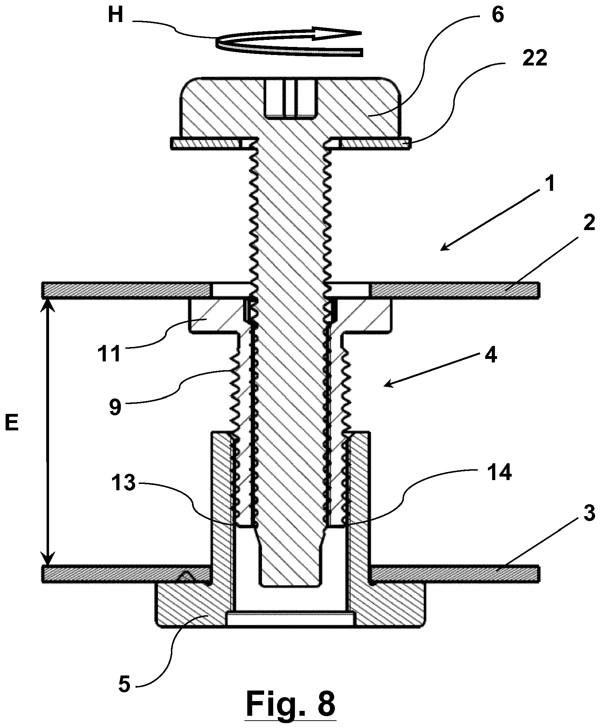

Sur les figures 6 à 9, on a représenté les différents états de montage du dispositif de fixation 1. Sur la figure 6, le dispositif 1 est dans un état initial dans lequel, il est positionné en regard de la pièce 2 à fixer, avec l'écart E qui reste à compenser. L'élément de réglage 4 peut également ne pas être inséré dans l'écrou 5. La vis 6 de fixation comporte une tête et une tige munie d'un filetage externe 20 du deuxième sens de pas et configuré pour coopérer avec le filetage interne 10 de l'élément de réglage 4. La vis 6 de fixation est d'abord vissée dans l'unité de réglage 7 à travers une ouverture 21 prévue dans la pièce à fixer 2. En particulier, la vis 6 est insérée dans le filetage interne 10 de l'élément de réglage 4. Pour visser la vis 6 dans l'élément de réglage 4, la vis 6 est animée en rotation selon le sens horaire des aiguilles d'une montre H lorsque le filetage interne 10 est à pas à droite. La vis 6 progresse par vissage dans le filetage interne 10 jusqu'à ce que la vis 6 soit en contact avec le ou les filets déformés 13, 14. Sur la figure 7, le dispositif de fixation 1 est dans un état de réglage dans lequel la vis 6 est en contact avec les filets déformés 13, 14. Lorsque la vis 6 atteint les filets déformés 13, 14, elle se bloque, en d'autres termes elle ne progresse plus dans le filetage interne 10 de l'élément de réglage 4. Le blocage vient du couple de friction fourni par les filets 13, 14. Le blocage entraîne l'élément de réglage 4 en rotation, dans le sens horaire H des aiguilles d'une montre, et du fait que le filetage externe 9 a un sens de pas opposé à celui de la vis de fixation 6, lorsqu'on visse la vis 6, on dévisse l'élément de réglage 4 de l'écrou 5. En effet, la rotation de la vis 6 entraîne l'élément de réglage 4 en translation dans la direction référencée M sur la figure 7. En outre, lors de la translation, l'élément de réglage 4 s'éloigne de l'écrou 5, par dévissage, et se rapproche de la pièce 2. Ce qui permet de compenser l'écart E entre la pièce 2 et le support 3. Avantageusement, lorsque l'élément de réglage 4 est bloqué sur l'écrou 5 avec le couple de blocage, au moins un filet déformé 13, 14 est réalisé de manière à fournir un couple de friction supérieur au couple de blocage afin de pouvoir débloquer l'élément de réglage 4 de l'écrou 5. C'est-à-dire que lorsque le couple de vissage fourni par la vis augmente et devient supérieur ou égal au couple de blocage, la vis débloque l'élément de réglage 4 qui peut alors être dévissé de l'écrou 5. En particulier l'élément de réglage 4 progresse en translation jusqu'à ce que la tête d'appui 11 soit en contact avec la pièce 2, comme illustré sur la figure 8. Sur la figure 8, le dispositif de fixation est dans un état de compensation de l'écart dans lequel, l'élément de réglage 4 est en contact avec la pièce 2. Puis, la vis 6 de fixation reste entraînée en rotation dans le même sens de rotation H, et comme elle est bloquée dans les filets déformés 13, 14, l'élément de réglage 4 reste entraîné en rotation, ce qui permet à la tête d'appui 11 de gratter la pièce 2 à fixer. Plus particulièrement, il est avantageux de fournir un couple de friction supérieur ou égal à un couple de grattage, de façon à permettre de gratter la pièce 2 afin de garantir une conductivité électrique entre la pièce 2 et l'élément de réglage 4. Le couple minimum pour gratter une pièce, noté couple de grattage, est environ égal à 2 Nm. Par exemple, le couple de friction peut être supérieur ou égal à 2 Nm, pour être particulièrement adapté pour gratter une couche de dépôt par électrophorèse d'une peinture industrielle, employée notamment dans l'industrie automobile. Selon la déformation des filets du filetage interne 10 de l'élément de réglage 4, les filets déformés 13, 14 fournissent un couple de friction supérieur ou égal à 2 Nm qui est supérieur à celui des pattes de friction de l'art antérieur. Par ailleurs, les crans de grattage 12 améliorent le grattage de la pièce 2. On assure alors une conductivité électrique entre la pièce 2 et l'élément de réglage 4.

Une fois le grattage de la pièce effectué, la tête d'appui 11 exerce une pression sur la pièce 2, et la vis 6 exerce alors un couple de vissage sur les filets déformés 13, 14 qui augmente jusqu'à ce que le couple de vissage atteigne la valeur du couple de friction fourni par les filets déformés. En outre, le couple de vissage augmente du fait que l'élément de réglage 4 est en appui contre la pièce à fixer 2 et qu'il ne peut plus progresser en translation selon la direction M sans entraîner une déformation de la pièce 2. En particulier, le couple de vissage augmente lorsqu'on visse la vis 6 à l'aide d'un outil automatisé qui peut fournir un couple de vissage nettement supérieur au couple de friction. Lorsque le couple de vissage exercé par la vis 6 atteint le couple de friction, alors la vis 6 traverse les filets déformés et poursuit sa progression dans le filetage interne 10 de l'élément de réglage 4. De façon générale, le couple de friction est supérieur ou égal au couple de grattage, afin de garantir la conductivité électrique entre l'élément de réglage 4 et la pièce 2. Plus particulièrement, le couple de friction est supérieur ou égal à 2 Nm. Avantageusement, le couple de friction est inférieur à un couple de déformation afin de ne pas déformer la pièce à fixer 2. Le couple de déformation correspond au couple fournit par la vis 6 qui, lorsque la tête d'appui 11 est contre la pièce à fixer 2, engendre une pression sur la pièce à fixer 2 qui initialise une déformation de la pièce 2. Selon l'épaisseur et le matériau des pièces à fixer 2, le couple de déformation peut être égal à 6 Nm. Ainsi, comme les filets déformés 13, 14 ne peuvent résister à un couple de vissage supérieur au couple de friction, ils empêchent toute déformation de la pièce 2. Selon encore un autre avantage, le couple de friction est supérieur au couple de blocage afin de pouvoir débloquer l'élément de réglage de l'écrou 5. Ainsi on peut transporter l'unité de réglage 7 sans que l'élément de réglage 4 se dévisse, tout a en garantissant un dévissage de l'élément de réglage 4 lors du rattrapage de l'écart E entre la pièce 2 et le support 3. De préférence, le couple de blocage est supérieur au couple de grattage afin de garantir un grattage de la pièce pour assurer la conductivité électrique entre l'élément de réglage 4 et la pièce 2. Par exemple, on peut réaliser un filet déformé qui fournit un couple de friction égal à 2,5 Nm. Les filets 13, 14 déformés sont donc particulièrement adaptés pour fixer une pièce avec compensation d'écart. Le couple de friction, permettant de gratter la pièce 2, et qui laisse progresser la vis sans déformation de la pièce, est un paramètre dont la valeur peut être ajustée selon les besoins. En outre, la valeur du couple de friction est fonction de la forme des filets et du nombre de points réalisés par filets, selon la réalisation par frappe définie ci-avant.

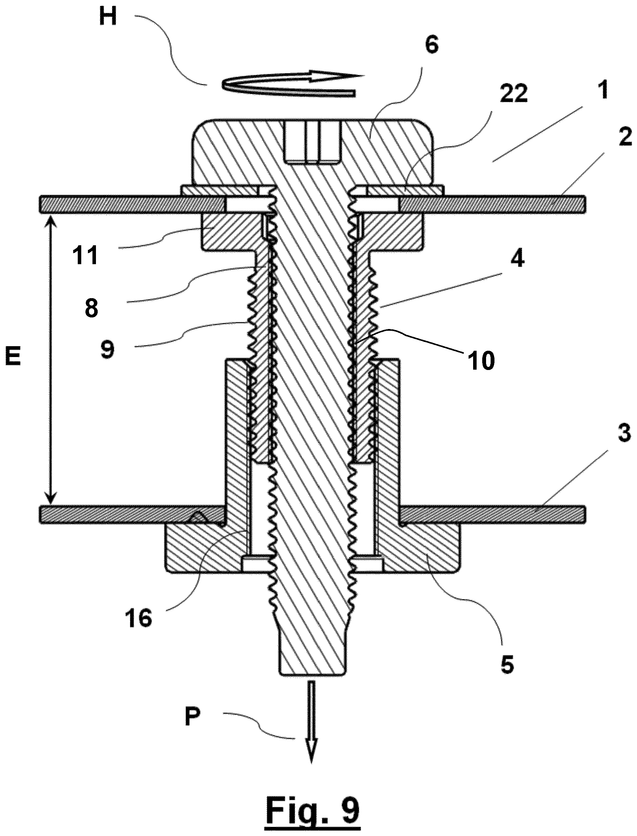

Lorsque l'écart E a été compensé, et la conductivité électrique réalisée, la vis 6 traverse les filets déformés et poursuit sa course, selon la direction référencée P, c'est-à-dire dans la direction du support 3, dans le filetage interne 10 de l'élément de réglage 4, jusqu'à ce que le dispositif de fixation 1 soit dans l'état bloqué, illustré à la figure 9. Dans l'état bloqué, la vis 6 exerce une tension de serrage sur l'élément de réglage 4, et la pièce 2 est fixée sur le support 3. En outre, le dispositif de fixation 1 peut comprendre une rondelle 22, située entre la tête de la vis 6 et la pièce 2, pour améliorer le serrage du dispositif de fixation 1. On peut noter que pendant toute l'opération de montage du dispositif de fixation 1 sur la pièce à fixer 2, on anime en rotation la vis de fixation 6 dans le même sens de rotation et de manière continue, ce qui permet une automatisation du montage.

Un tel dispositif de fixation permet de compenser automatiquement l'écart entre deux pièces. Un tel dispositif de fixation est particulièrement adapté pour l'industrie automobile et peut également être utilisé dans le secteur naval ou celui de l'aéronautique.

## Revendications

1. Elément de réglage pour compenser un écart (E) entre un support (3) et une pièce (2) à fixer sur le support (3), comprenant un corps creux (8) muni d'un filetage externe (9) d'un premier sens de pas, **caractérisé en ce que** le corps creux (8) comporte un filetage interne (10) d'un deuxième sens de pas opposé au premier, le filetage interne (10) comprenant au moins deux filets (13, 14), et dont au moins un filet (13, 14) est déformé pour fournir un couple de friction supérieur à celui fourni par les autres filets du filetage interne (10).

2. Elément selon la revendication 1, dans lequel le couple de friction est supérieur ou égal à un couple de grattage permettant de gratter la pièce à fixer (2) pour réaliser une conductivité électrique entre la pièce à fixer (2) et l'élément de réglage.

3. Elément selon la revendication 1 ou 2, comprenant en outre une tête d'appui (11) située à une extrémité du corps creux (8), ledit au moins un filet déformé (13, 14) étant situé à l'extrémité opposée à la tête d'appui (11).

4. Elément selon la revendication 1 ou 2, comprenant en outre une tête d'appui (11) située à une extrémité du corps creux (8), ledit au moins filet déformé (13, 14) étant situé à proximité de la tête d'appui (11).

5. Elément selon la revendication 3 ou 4, comportant au moins un cran de grattage (12) situé en saillie de la tête d'appui (11).

6. Elément selon l'une des revendications 1 à 5, dans lequel ledit au moins un filet déformé (13, 14) peut être traversé par une vis (6) lorsqu'un couple de vissage exercé par la vis sur ledit au moins un filet déformé (13, 14) est supérieur au couple de friction.

7. Unité de réglage pour compenser un écart (E) entre un support (3) et une pièce (2) à fixer sur le support (3), comprenant :
- un élément de réglage selon l'une des revendications 1 à 6 ; et
- un écrou (5) monté sur le support (3) et comprenant un filetage interne (16) du premier sens de pas configuré pour coopérer avec le filetage externe (9) de l'élément de réglage ;
- l'élément de réglage étant vissé dans le filetage interne (16) de l'écrou (5).

8. Unité de réglage selon la revendication 7, dans lequel l'élément de réglage est bloqué sur l'écrou (5) avec un couple de blocage, et le couple de friction fourni par ledit au moins un filet déformé (13, 14) du filetage interne (10) de l'élément de réglage est supérieur au couple de blocage afin de débloquer l'élément de réglage de l'écrou (5).

9. Dispositif de fixation d'une pièce sur un support, comprenant :
- une unité de réglage pour compenser un écart entre le support et la pièce, selon la revendication 7 ou 8 ; et
- une vis (6) ayant un filetage externe (20) du deuxième sens de pas configuré pour coopérer avec le filetage interne (10) de l'élément de réglage de l'unité de réglage, la vis (6) étant vissée dans le filetage interne (10) de l'élément de réglage de façon à dévisser l'élément de réglage de sorte qu'il soit en appui contre la pièce (2).

10. Dispositif selon la revendication 9, dans lequel le couple de friction fourni par ledit au moins un filet déformé (13, 14) du filetage interne (10) de l'élément de réglage est inférieur à un couple de déformation pour lequel la pièce (2) se déforme.

## Patentansprüche

1. Einstellelement zum Ausgleich eines Zwischenraums (E) zwischen einem Träger (3) und einem auf dem Träger (3) zu befestigenden Teil (2), das einen Hohlkörper (8) umfasst, der mit einem Außengewinde (9) einer ersten Steigungsrichtung versehen ist, **dadurch gekennzeichnet, dass** der Hohlkörper (8) ein Innengewinde (10) einer zweiten Steigungsrichtung umfasst, die entgegengesetzt zur ersten ist, wobei das Innengewinde (10) mindestens zwei Gänge (13, 14) aufweist, von denen mindestens ein Gang (13, 14) so ausgebildet ist, dass er ein Reibungsmoment liefert, das höher ist als das, das von den anderen Gängen des Innengewindes (10) geliefert wird.

2. Element nach Anspruch 1, bei dem das Reibungsmoment größer als oder gleich ein/em Kratzmoment ist und so ein Kratzen des zu befestigenden Teils (2) ermöglicht, um eine elektrische Konduktivität zwischen dem zu befestigenden Teil (2) und dem Einstellelement herzustellen.

3. Element nach Anspruch 1 oder 2, das ferner einen oberen Auflageteil (11) umfasst, der sich an einem Ende des Hohlkörpers (8) befindet, wobei der besagte mindestens eine verformte Gang (13, 14) am entgegengesetzten Ende zum oberen Auflageteil (11) angeordnet ist.

4. Element nach Anspruch 1 oder 2, das ferner einen oberen Auflageteil (11) umfasst, der sich an einem Ende des Hohlkörpers (8) befindet, wobei der besagte mindestens eine verformte Gang (13, 14) nahe dem oberen Auflageteil (11) angeordnet ist.

5. Element nach Anspruch 3 oder 4, das mindestens eine Kratzkerbe (12) umfasst, die aus dem oberen Auflageteil (11) hervorstehend angeordnet ist.

6. Element nach einem der Ansprüche 1 bis 5, bei dem durch den mindestens einen verformten Gang (13, 14) eine Schraube (6) geführt sein kann, wenn ein von der Schraube auf den zumindest einen verformten Gang (13, 14) ausgeübtes Schraubmoment größer als das Reibungsmoment ist.

7. Einstelleinheit zum Ausgleich eines Zwischenraums (E) zwischen einem Träger (3) und einem auf dem Träger (3) zu befestigenden Teil (2), die umfasst:
- ein Einstellelement nach einem der Ansprüche 1 bis 6; und
- eine Mutter (5), die an den Träger (3) montiert ist und ein Innengewinde (16) der ersten Gangrichtung umfasst, das so vorgesehen ist, dass es mit dem Außengewinde (9) des Einstellelements zusammenwirkt;
- das Einstellelement in das Innengewinde (16) der Mutter (5) geschraubt ist.

8. Einstelleinheit nach Anspruch 7, bei der das Einstellelement auf der Mutter (5) mit einem Blockierungsmoment blockiert ist, und das von dem mindestens einen verformten Gang (13, 14) des Innengewindes (10) des Einstellelements gelieferte Reibungsmoment größer ist als das Blockierungsmoment, um das Einstellelement von der Mutter (5) freizugeben.

9. Befestigungsvorrichtung für ein Teil auf einem Träger, die umfasst:
- eine Einstelleinheit zum Ausgleich eines Zwischenraums zwischen dem Träger und dem Teil nach Anspruch 7 oder 8; und
- eine Schraube (6) mit einem Außengewinde (20) der zweiten Gangrichtung, das so vorgesehen ist, dass es mit dem Innengewinde (10) des Einstellelements der Einstelleinheit zusammenwirkt, wobei die Schraube (6) so in das Innengewinde (10) des Einstellelements geschraubt ist, dass das Einstellelement herausgeschraubt wird, sodass es gegen das Teil (2) anliegt.

10. Vorrichtung nach Anspruch 9, bei der das Reibungsmoment, das von dem mindestens einen verformten Gang (13, 14) des Innengewindes (10) des Einstellelements geliefert wird, niedriger ist als ein Verformungsmoment, bei dem das Teil (2) sich verformt.

## Claims

1. Adjusting member to compensate a gap (E) between a support (3) and a part (2) to be fixed on the support (3), comprising a hollow body (8) provided with an external thread (9) in a first thread direction, **characterized in that** the hollow body (8) comprises an internal thread (10) having a second thread direction opposite to the first one, the internal thread (10) comprising at least two threads (13, 14), and at least one thread (13, 14) is deformed to supply a higher friction torque than that supplied by the other threads of the internal thread (10).

2. Member according to claim 1, wherein the friction torque is higher than or equal to a scratching torque enabling the part to be fixed (2) to be scratched to achieve an electric conductivity between the part to be fixed (2) and the adjusting member.

3. Member according to claim 1 or 2, further comprising a bearing head (11) located at one end of the hollow body (8), said at least one deformed thread (13, 14) being situated at the opposite end to the bearing head (11).

4. Member according to claim 1 or 2, further comprising a bearing head (11) located at one end of the hollow body (8), said at least one deformed thread (13, 14) being situated in proximity to the bearing head (11).

5. Member according to claim 3 or 4, comprising at least one scratching notch (12) located salient from the bearing head (11).

6. Member according to one of claims 1 to 5, wherein said at least one deformed thread (13, 14) can have a screw (6) passing through it when a screwing torque exerted by the screw on said at least one deformed thread (13, 14) is higher than the friction torque.

7. Adjusting unit to compensate a gap (E) between a support (3) and a part (2) to be fixed on the support (3), comprising:
- an adjusting member according to one of claims 1 to 6; and
- a nut (5) fitted on the support (3) and comprising an internal thread (16) of the first pitch direction configured to collaborate with the external thread (9) of the adjusting member;
- the adjusting member being screwed into the internal thread (16) of the nut (5).

8. Adjusting unit according to claim 7, wherein the adjusting member is blocked on the nut (5) with a blocking torque, and the friction torque supplied by said at least one deformed thread (13, 14) of the internal thread (10) of the adjusting member is higher than the blocking torque in order to release the adjusting member from the nut (5).

9. Device for attaching a part on a support, comprising:
- an adjusting unit to compensate a gap between the support and the part, according to claim 7 or 8; and
- a screw (6) having an external thread (20) of the second thread direction configured to cooperate with the internal thread (10) of the adjusting member of the adjusting unit, the screw (6) being screwed into the internal thread (10) of the adjusting member so as to unscrew the adjusting member so that it is pressing against the part (2).

10. Device according to claim 9, wherein the friction torque supplied by said at least one deformed thread (13, 14) of the internal thread (10) of the adjusting member is lower than a deformation torque for which the part (2) is deformed.
